# EUROPÄISCHE PATENTSCHRIFT

(11) **EP 2 807 730 B1**
(45) Veröffentlichungstag und Bekanntmachung des Hinweises auf die Patenterteilung: **12.10.2016**
(21) Anmeldenummer: 13700975.9
(22) Anmeldetag: 15.01.2013
(51) Int. Cl.: H02K 5/22, H02K 7/116, H02K 7/08

(54) **GETRIEBE MIT EINEM ZENTRALEN GEHÄUSETEIL**
TRANSMISSION COMPRISING A CENTRAL HOUSING PART
TRANSMISSION POURVUE D'UNE PARTIE CARTER CENTRALE

(30) Priorität: 26.01.2012 DE 102012001389
(43) Veröffentlichungstag der Anmeldung: 03.12.2014
(73) Patentinhaber: Sew-Eurodrive GmbH & Co. KG, 76646 Bruchsal (DE)
(72) Erfinder: DOMBECK, Michael, 76703 Kraichtal/Gochsheim (DE); TESCH, Sven, 76698 Ubstadt-Weiher (DE); SCHILLINGER, Jens, 76437 Rastatt (DE); MORITZ, Thorsten, 76698 Ubstadt-Weiher (DE)
(86) Internationale Anmeldenummer: PCT/EP2013/000095
(87) Internationale Veröffentlichungsnummer: WO 2013/110437

(56) Entgegenhaltungen:
- EP-A1- 2 351 682
- JP-A- 2001 268 842
- US-A1- 2011 089 789

## Beschreibung

Die Erfindung betrifft ein Getriebe mit einem zentralen Gehäuseteil.

Es ist bekannt, Getriebe mit einem Elektromotor anzutreiben. Dabei ist die Lagerung der Rotorwelle des Elektromotors in einem anderen Teil angeordnet als die Lagerung der Abtriebswelle oder Zwischenwelle des Getriebes.

Aus der EP 2 351 682 A1 ist eine elektrische Leistungssteuereinheit bekannt.

Aus der US 2011/0089789 A1 ist eine motorische Antriebseinheit bekannt.

Aus der JP 2001-268842 ist ein Getriebemotor bekannt.

Der Erfindung liegt daher die Aufgabe zugrunde, ein Getriebe mit einem zentralen Gehäuseteil weiterzubilden, wobei
Erfindungsgemäß wird die Aufgabe bei dem Getriebe nach den in Anspruch 1 angegebenen Merkmalen gelöst.

Wichtige Merkmale der Erfindung bei dem Getriebe sind, dass es mit einem zentralen Gehäuseteil ausgeführt ist, wobei
im zentralen Gehäuseteil
- die Lager der eintreibenden Welle des Getriebes,
- die Lager der Abtriebswelle
- und/oder die Lager einer Zwischenwelle
aufgenommen sind, insbesondere aufgenommen und wärmeleitend verbunden sind, wobei die wellen parallel zueinander angeordnet sind,
wobei am zentralen Gehäuseteil ein Klemmenkastenansatz ausgeformt ist, auf den ein Oberteil, insbesondere Klemmenkastendeckel oder Umrichter, insbesondere Gehäuseunterteil eines Umrichters, aufgesetzt ist zur Bildung eines Anschlussbereichs,
wobei das zentrale Gehäuseteil eine Ausnehmung, insbesondere eine Kabeldurchführung, zur Durchführung von elektrischen Leitungen, insbesondere Statorwicklungsdrähten, aufweist, wobei die Ausnehmung in den Anschlussbereich mündet.
insbesondere wobei das zentrale Gehäuseteil eine Ausnehmung aufweist, durch welche Statorwicklungsdrähte in einen Anschlussbereich, insbesondere in einen Anschlusskasten, herausgeführt sind, insbesondere aus dem Motorinnenraum radial herausgeführt sind.

Von Vorteil ist dabei, dass das Statorblechpaket eines Motors anbaubar ist und die Statorwicklungsdrähte durch die Wandung des zentralen Gehäuseteils führbar sind. Somit ist ein Herausführen der Anschlüsse der Statorwicklung in radialer Richtung in den Anschlussbereich ermöglicht, wodurch die elektrischen Leitungen geschützt sind durch das zentrale Gehäuseteil, insbesondere durch den topfförmigen Aufnahmebereich für einen Wickelkopf der Statorwicklung.

Bei einer vorteilhaften Ausgestaltung weist das zentrale Gehäuseteil als Klemmenkastenansatz einen Oberflächenabschnitt auf, in welchen Gewindebohrungen eingebracht sind,
wobei die Ausnehmung im Oberflächenabschnitt angeordnet ist,
insbesondere wobei der Oberflächenabschnitt ein ebener Flächenabschnitt ist. Von Vorteil ist dabei, dass die Wandung des zentralen Gehäuseteils in dem Bereich des Klemmenkastenansatzes derart verdickt ausgeführt ist, dass ein Einbringen von Bohrungen ermöglicht ist.

Bei einer vorteilhaften Ausgestaltung ist im Anschlussbereich eine Anschlussvorrichtung angeordnet, welche einen Statorwicklungsdraht mit einer anderen elektrischen Leitung elektrisch verbindet,
insbesondere wobei die elektrische Leitung verbunden ist mit einem Umrichter oder einem vom Getriebe beabstandeten Elektrogerät. Von Vorteil ist dabei, dass die von der äußeren Umgebung her in den Anschlussbereich führenden elektrischen Leitungen durch den Klemmenkastendeckel oder das Unterteil eines aufgesetzten Umrichters führbar sind. Auf diese Weise ist ein möglichst geschütztes Führen der elektrischen Statoranschluss-Leitungen innerhalb des Gehäuses ermöglicht und von außen muss nur ein Steckverbinderteil mit den elektrischen Leitungen zugeführt werden.

Als Anschlussvorrichtung ist eine Leiterplatte einsetzbar, auf der ein Steckverbinderteil bestückt und lötverbunden ist. Somit ist ein einfaches und schnelles Verbinden oder Trennen eines Gegensteckverbinderteils ausführbar, welches von der äußeren Umgebung her in den Anschlussbereich geführt ist, oder eines Gegensteckverbinderteils, welches beim Aufsetzen eines Umrichters auf den Klemmenkastenansatz verbindbar ist mit dem Steckverbinderteil. Außerdem ist die Verschaltung des Stators des Motors, beispielsweise in Sternschaltung oder Dreieckschaltung, durch das Layout der Leiterplatte ausführbar. Somit ist der Fertigungsaufwand und auch der Wartungsaufwand reduzierbar.

Bei einer vorteilhaften Ausgestaltung fungiert die eintreibende Welle auch als einseitig im zentralen Gehäuseteil gelagerte Rotorwelle eines Elektromotors.

Von Vorteil ist dabei, dass ein kompakter Aufbau ermöglicht ist, wobei durch die gemeinsame Lagerung im gleichen Gehäuseteil die Lageraufnahmen bei ihrer Herstellung in einer Werkzeugmaschine in einer einzigen Aufspannung fertigbar sind. Somit ist eine hohe Genauigkeit in der relativen Beabstandung der Lageraufnahmen erreichbar. Außerdem ist die Wärme der Lagerung der Rotor in einem vom Stator getrennten Teil an die Umgebung abführbar.

Bei einer vorteilhaften Ausgestaltung ist am zentralen Gehäuseteil eine topfförmige Aufnahme für einen Wickelkopf des Stators ausgeformt, die durch die Ausnehmung unterbrochen ist. Von Vorteil ist dabei, dass die elektrischen Leitungen im schmierölfreien Beriech des Getriebes führbar sind. Dabei sind sie durch die Wandung des zentralen Gehäuseteils geführt, insbesondere von innen nach außen. Dabei wird jedoch der Innenraum erst durch Anbau eines Statorblechpakets an das zentrale Gehäuseteil gebildet.

Bei einer vorteilhaften Ausgestaltung weist die Rotorwelle in einem ersten axialen Bereich ein Aktivteil auf und in einem zweiten axialen Bereich weist die Rotorwelle eine eintreibende Verzahnung des Getriebes auf oder mit einem eintreibenden Verzahnungsteil des Getriebes verbunden ist,
wobei die Lagerung, insbesondere beide Lager der Rotorwelle, der Rotorwelle axial, insbesondere also in Rotorachsrichtung, zwischen dem ersten und dem zweiten axialen Bereich angeordnet ist,
insbesondere wobei ein am zentralen Gehäuseteil aufgenommener Wellendichtring axial zwischen der Lagerung der Rotorwelle und der eintreibenden Verzahnung des Getriebes angeordnet ist. Von Vorteil ist dabei, dass im Bereich der Lagerung eine Dichtung anbringbar ist, welche den Schmieröl-befüllten Verzahnungsbereich vom Motorinnenraum trennt. Die Lager sind fettgeschmiert ausführbar, da sie außerhalb des Verzahnungsbereichs angeordnet sind.

Bei einer vorteilhaften Ausgestaltung ist zwischen dem zentralen Gehäuseteil und dem Statorblechpaket des Motors eine Wärmesperre, insbesondere Dichtung, angeordnet. Von Vorteil ist dabei, dass kein Wasser zum Motorinnenraum dringen kann. Außerdem verschlechtert die Dichtung, beispielsweise eine Flachdichtung und/oder ein O-Ring, den Wärmeübergang zwischen zentralem Gehäuseteil und Statorblechpaket. Zusammen mit einer zwischen Gehäuseunterteil des auf den Klemmenkastenansatz aufgesetzten Umrichters und dem zentralen Gehäuseteil angeordneten Dichtung, beispielsweise wiederum eine Flachdichtung und/oder ein O-Ring, wird der Wärmeübergangswiderstand von der Elektronik zum Motor erheblich verschlechtert. Somit ist quasi eine doppelte Wärmesperre zwischen Elektronik und Motor erreicht.

Bei einer vorteilhaften Ausgestaltung weist das zentrale Gehäuseteil eine Ausnehmung auf, durch welche Statorwicklungsdrähte in einen Anschlussbereich, insbesondere in einen Anschlusskasten, herausgeführt sind, insbesondere aus dem Motorinnenraum radial herausgeführt sind. Von Vorteil ist dabei, dass der Anschlusskasten am zentralen Gehäuseteil des Getriebes angeformt ist. Somit kann an das zentrale Gehäuseteil ein Statorblechpaket angebaut werden, ohne dass am Statorgehäuse oder Statorblechpaket eine Anschlussvorrichtung oder ein Anschlusskasten vorgesehen werden muss.

Bei einer vorteilhaften Ausgestaltung ist zwischen dem zentralen Gehäuseteil und einem verbundenen Getriebedeckel eine weitere Wärmesperre, insbesondere Dichtung, angeordnet. Von Vorteil ist dabei, dass der Getriebedeckel dicht verbindbar ist mit dem Gehäuseteil. Der Getriebedeckel ist jedoch kühler als das Gehäuseteil. Somit ist die Wärme der Leistungselektronik des Umrichters dem Getriebedeckel gegenüber stehend effektiv an die Umgebungsluft abführbar, da vom Getriebedeckel nur ein geringer Wärmestrom in die Umgebungsluft zwischen Gehäuseunterteil und Getriebedeckel einströmt.

Bei einer vorteilhaften Ausgestaltung weist das zentrale Gehäuseteil einen einstückig an ihm angeformten Klemmenkastenansatz auf, auf den ein Klemmenkastendeckel oder alternativ ein Umrichter aufsetzbar ist, insbesondere schraubverbindbar ist. Von Vorteil ist dabei, dass ein einfaches Verbinden mit einem Umrichter ermöglicht ist. Der Umrichter ist auf dem Getriebe aufgesetzt und nicht auf dem Motorbereich. Somit ist der Motor vom Umrichter bestmöglich wärmetechnisch getrennt.

Bei einer vorteilhaften Ausgestaltung ist ein Umrichter mit dem Getriebe verbunden, wobei der Umrichter ein Gehäuseunterteil aufweist, mit welchem die Leistungselektronik des Umrichters verbunden ist, insbesondere wärmeleitend verbunden ist, und wobei der Umrichter ein auf das Gehäuseunterteil verbundenes Gehäuseöberteil aufweist, mit welchem die Signalelektronik wärmeleitend verbunden ist, insbesondere über zwischengeordnete Luft. Von Vorteil ist dabei, dass die Wärme der Leistungshalbleiter des Umrichters an die Umgebung des Getriebes abführbar ist, wobei der Umrichter auf dem Getriebe befestigt ist und dort auch die Versorgungskabel in den vom Anschlusskasten, also Klemmenkasten, umgebenen Anschlussbereich geführt sind, wobei der Anschlusskasten am Getriebe angeordnet ist und zwischen dem Umrichter und dem Getriebe angeordnet ist. Somit sind die Versorgungskabel von der Umgebung aus in den Anschlussbereich führbar und ebenso die Enden der Statorwicklungsdrähte. Außerdem sind auch die elektrischen Anschlüsse des Umrichters über eine Steckverbindung in den Anschlussbereich führbar und somit der Umrichter mit elektrischer Energie versorgbar.

Bei einer vorteilhaften Ausgestaltung ist zwischen Gehäuseunterteil und Gehäuseoberteil eine Wärmesperre, insbesondere Dichtung, angeordnet
und/oder das Gehäuseoberteil ist aus Kunststoff ausgeführt. Von Vorteil ist dabei, dass die Leistungselektronik auf einem höheren Temperatur betreibbar ist als die Signalelektronik, welche wärmeleitend mit dem Gehäuseoberteil verbunden ist, so dass die Wärme der Signalelektronik getrennt von der Wärme der Leistungselektronik an die Umgebung abführbar ist. Die Wärme der Leistuhgselektronik ist über das Gehäuseunterteil an die zwischen Gehäuseunterteil und Getriebe, insbesondere Getriebedeckel des Getriebes, abführbar.

Bei einer vorteilhaften Ausgestaltung ist das Gehäuseunterteil mit dem Klemmenkastenansatz des zentralen Gehäuseteils verbunden und überragt dieses seitlich,
und/oder das Gehäuseunterteil in axialer Richtung den vom zentralen Gehäuseteil, den vom Getriebedeckel, den von einer Zwischenwelle und/oder den von der Abtriebswelle axial überdeckten Bereich zumindest teilweise überdeckt. Von Vorteil ist dabei, dass kein direkter Kontakt zwischen Gehäuseunterteil und Getriebe, insbesondere Getriebedeckel, besteht. Somit ist die Wärme an die zwischengeordnete Umgebungsluft abführbar. Da der Getriebedeckel eine geringere Temperatur als das restliche Getriebe aufweist, ist die Entwärmung des Gehäuseunterteils an die Umgebungsluft sehr effektiv ausführbar.

Bei einer vorteilhaften Ausgestaltung ist durch die den Getriebedeckel abgedeckte Ausnehmung des zentralen Gehäuseteils das Endrad des Getriebes hindurchführbar, insbesondere bei Montage des Getriebes. Von Vorteil ist dabei, dass ein Getriebedeckel am Getriebe über eine als Dichtung ausgeführte Wärmesperre verbunden ist und somit eine niedrige Temperatur aufweist als das restliche Getriebe.

Bei einer vorteilhaften Ausgestaltung überdeckt der vom Anschlussbereich axial überdeckte Bereich zumindest teilweise den von der Lagerung der Rotorwelle oder von einem Lager der Rotorwelle überdeckten axialen Bereich. Von Vorteil ist dabei, dass ein Motor kompakt an das Getriebe anbaubar ist. Denn die Statorwicklungsdrähte sind direkt in den Anschlussbereich führbar, wobei der Anschlussbereich radial über einem Lager der Rotorwelle angeordnet ist.

Außerdem ist auf diese Weise ein Sensor zwischen den Lagern der Rotorwelle am zentralen Gehäuseteil anordenbar, der mit der Rotorwelle derart in Wirkverbindung tritt, dass eine physikalische Größe, wie beispielsweise Drehzahl oder Drehmoment, bestimmbar ist. Durch eine Ausnehmung in der ringförmigen Lageraufnahme der Lagerung der Rotorwelle sind elektrische Leitungen zum Sensor führbar, die vom Anschlussbereich durch eine Ausnehmung im zentralen Gehäuseteil geführt sind. Die Sensorleitungen sind also geschützt vom Sensor zum Anschlussbereich führbar.

Bei einer vorteilhaften Ausgestaltung ist das Statorblechpaket aus zwei Sorten von Einzelblechteilen zusammengesetzt, insbesondere stanzpaketiert, klebeverbunden und/oder schweißverbunden ist,
insbesondere wobei das Statorblechpaket einen ersten Abschnitt aufweist, der aus Einzelblechteilen erster Sorte zusammengesetzt ist, und einen zweiten Abschnitt aufweist, der aus Einzelblechteilen zweiter Sorte zusammengesetzt ist,
insbesondere wobei die erste Wärmesperre an einer Innenecke angeordnet ist, die im Übergangsbereich zwischen dem ersten und zweiten Abschnitt gebildet ist,
insbesondere wobei die Einzelblechteile der ersten Sorte sich radial weiter erstrecken als die Einzelblechteile der zweiten Sorte. Von Vorteil ist dabei, dass Stator und zentrales Gehäuseteil wärmetechnisch separiert sind.

Bei einer vorteilhaften Ausgestaltung ist am zentralen Gehäuseteil eine Lageraufnahme für die Lager der Rotorwelle ausgeformt, wobei die Lageraufnahme ringförmig ausgeführt ist, wobei an der Außenseite des Rings in Umfangsrichtung regelmäßig voneinander beabstandete Stützbereiche aufweist, insbesondere deren größter Radialabstand in axialer Richtung vom Motor weg zunimmt. Von Vorteil ist dabei, dass eine verbesserte Steifigkeit und Stabilität der Lageraufnahme erreichbar ist.

Bei einer vorteilhaften Ausgestaltung ist am zentralen Gehäuseteil eine topfförmige Aufnahme für einen Wickelkopf des Stators angeordnet. Von Vorteil ist dabei, dass eine kompakte Ausführung eines Getriebemotors ermöglicht ist, der einfach fertigbar ist.

Bei einer vorteilhaften Ausgestaltung sind Abtriebswelle und Rotorwelle koaxial angeordnet. Von Vorteil ist dabei, dass ein koaxialer Antrieb einfach herstellbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Längsschnitt durch ein erstes erfindungsgemäßes Ausführungsbeispiel gezeigt, das ein Getriebegehäuse 1 umfasst und einen Klemmenkasten zum Anschluss elektrischer Versorgungsleitungen aufweist.
In der Figur 2 ist eine Schrägansicht des Getriebegehäuses 1 aus einer ersten Blickrichtung gezeigt.
In der Figur 3 ist eine Schrägansicht des Getriebegehäuses 1 aus einer anderen Blickrichtung gezeigt.
In der Figur 4 ist eine Schrägansicht des Ausführungsbeispiel von außen gezeigt.
In der Figur 5 ist eine Schrägansicht eines weiteren Ausführungsbeispiels gezeigt, welches im Unterschied zum ersten Ausführungsbeispiel einen auf den Klemmenkastenansatz aufgesetzten Umrichter aufweist.
In der Figur 6 ist ein Längsschnitt durch das zweite Ausführungsbeispiel gezeigt.

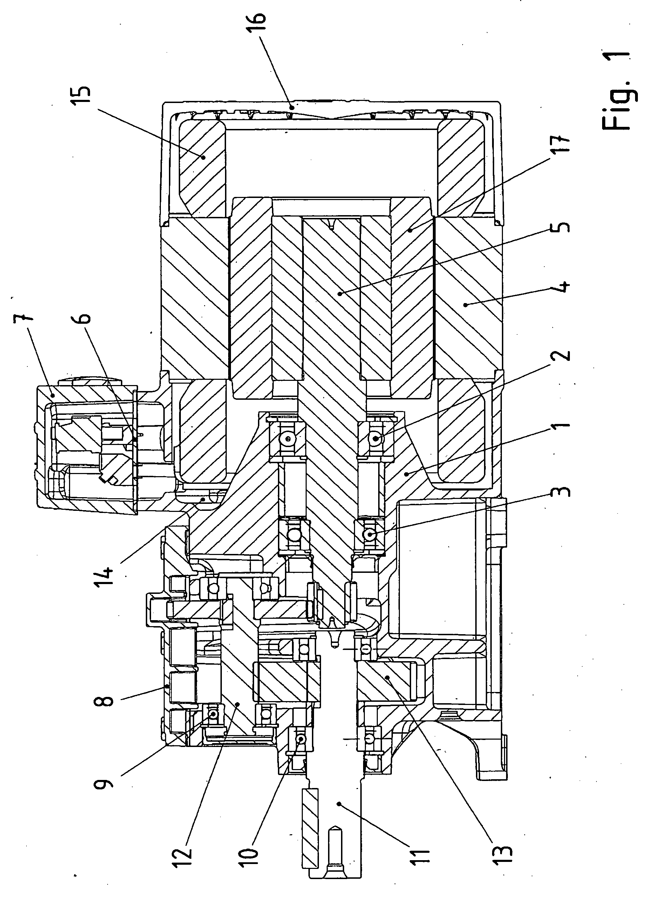

Wie in Figur 1 gezeigt, weist das erfindungsgemäße Getriebe ein zentrales Gehäuseteil 1 auf, welches Lager 10 der Abtriebswelle des Getriebes, Lager 9 der Zwischenwelle 12 Aufnimmt und auch Lager (2, 3) einer eintreibenden Welle 5, die auch als Rotorwelle eines antreibenden Elektromotors fungiert, welcher eintriebsseitig an das Getriebe angebaut werden kann.

Hierzu wird die als Rotorwelle fungierende eintreibende Welle 5 mit einem Aktivteil, insbesondere Kurzschlusskäfig für Betriebsweise nach Art eines Asynchronmotors und/oder Dauermagneten für Betriebsweise als Synchronmotor, ausgeführt und ein Statorblechpaket 4 an das zentrale Gehäuseteil 1 angesetzt, an welches wiederum ein Gehäuseteil 16 angesetzt wird und durch das Statorblechpaket 4 durchgehende Schrauben in das zentrale Gehäuseteil eingeschraubt werden, so dass das Gehäuseteil 16 von den Schraubenköpfen auf das Statorblechpaket 4 gedrückt wird und dieses wiederum auf das zentrale Gehäuseteil 1.

Die elektrischen Leitungen der Statorwicklung werden durch eine Ausnehmung 14 im zentralen Gehäuseteil 1 des Getriebes in einen Klemmenkasten, also Anschlusskasten, geführt. Dabei werden also vom Motorbereich kommende elektrische Leitungen durch eine Ausnehmung im zentralen Gehäuseteil 1 in einen Anschlussbereich geführt, welcher begrenzt ist durch einen am zentralen Gehäuseteil 1 ausgeformten Klemmenkastenansatz und einen auf diesen aufgesetzten Klemmenkastendeckel 7. Somit ist also der Anschlussbereich durch das zentrale Gehäuseteil 1 des Getriebes samt der Ausnehmung 14 und den Klemmenkastendeckel 7 begrenzt und gehäusebildend umgeben.

Im Klemmenkasten ist eine Leiterplatte 6 schraubverbunden mit dem zentralen Gehäuseteil 1, wobei die Leitungen der Statorwicklung zur Leiterplatte 6 geführt und dort elektrisch verbunden, insbesondere lötverbunden, sind.

Von der äußeren Umgebung ist ein Kabel zum Anschlusskasten hin führbar, an dessen Ende ein Steckverbinderteil angeordnet ist, dessen Kontakte mit elektrischen Leitungen des Kabels verbunden sind. Ein entsprechendes Gegensteckverbinderteil ist auf der Leiterplatte 6 elektrisch verbunden, insbesondere lötverbunden. Somit ist ein einfaches Verbinden oder Trennen der den Stator versorgenden elektrischen Leitungen ermöglicht.

Vorzugsweise ist der Klemmenkastendeckel 7 als Gehäuse des Steckverbinderteils ausgeführt, so dass beim Aufsetzen des Klemmenkastendeckels 7 auf den Klemmenkastenansatz des zentralen Gehäuseteils 1 nicht nur der Innenraum des Getriebemotors abgedichtet wird gegen die Umgebung sondern auch gleichzeitig die elektrischen Verbindungen zwischen Steckverbinderteil und Gegensteckverbinderteil erzeugt werden und somit die Statorwicklung über die Steckverbindung versorgbar ist, wobei Leiterbahnen der Leiterplatte 6 elektrisch zwischengeordnet sind zwischen den Statorwicklungsdrähten und den Kontakten des Gegensteckverbinderteils.

Vorzugsweise ist die Leiterplatte 6 mit einer metallischen Schraube an das aus Metall ausgeführte zentrale Gehäuseteil 1 angeschraubt. Dabei kontaktiert der ebenfalls aus Metall ausgeführte Schraubenkopf einen Leiterbahnabschnitt der Leiterplatte, so dass auf diese Weise ein Nullleiter, insbesondere eine PE-Leitung, des Kabels elektrisch mit dem zentralen Gehäuseteil 1 verbunden ist. Der Nullleiter ist dabei ebenfalls über die Steckverbindung zur Leiterplatte, insbesondere zur Leiterbahn der Leiterplatte, geführt.

Da die Rotorwelle 5 einseitig im zentralen Gehäuseteil 1 gelagert ist, ist auf diese Weise eine fliegende Lagerung, also einseitige Lagerung, realisiert, die eine einfache Fertigung des Antriebs ermöglicht, insbesondere durch Zusammenführen der Teile in axialer Richtung. Außerdem sind die Lager (2, 3) des Rotors im selben zentralen Gehäuseteil 1 gelagert wie die Lager 10 der abtreibenden Welle 11 des Getriebes. Somit sind die Lageraufnahmen in einer Werkzeugmaschine in derselben Aufspannung des zentralen Gehäuseteils in der Werkzeugmaschine fertigbar und es ist somit eine hohe Genauigkeit in der relativen Positionierung der Lageraufnahmen in einfacher Weise erreichbar.

Die einseitige Lagerung der Rotorwelle weist ein statorzugewandtes größeres Lager 2 auf und ein hierzu kleineres getriebezugewandtes Lager 3.

Die Rotorwelle 5 und die Abtriebswelle 11 sind zueinander parallel und sogar koaxial angeordnet.

Die Rotorwelle weist an ihrem axialen getriebezugewandten Endbereich eine Verzahnung auf, die als eintreibende Verzahnung des Getriebes fungiert. Somit ist die gesamte Lagerung der Rotorwelle 5 axial zwischen der eintreibenden Verzahnung, insbesondere Ritzel, und dem Aktivteil angeordnet.

Der am zentralen Gehäuseteil 1 einstückig angegossene Klemmenkastenansatz ist aus dem restlichen Grundkörper des Gehäuseteils des Getriebes erhoben ausgeführt und weist zueinander parallel ausgerichtete Gewindebohrungen auf, die jeweils senkrecht zur Achsrichtung der Rotorwelle 5 ausgerichtet sind. Somit ist der Klemmenkastendeckel 7 nach seinem Aufsetzen auf des Klemmenkastenansatz schraubverbindbar, wobei eine Dichtung zwischen Klemmenkastenansatz und Klemmenkastendeckel 7 vorsehbar ist.

Für das Anfügen des Motors weist das Gehäuseteil 1 eine kreisrunde topfförmige Aufnahme auf, so dass das Statorblechpaket mit seiner Innenecke anschließbar ist. Die topfförmige Aufnahme ist in einem in etwa quadratisch erscheinenden Flanschbereich vorgesehen. Somit sind in den vier Eckbereichen Bohrungen vorsehbar, so dass Gewindestangen oder Schrauben dort verbindbar sind.

Die Innenecke des Statorblechpakets wird gebildet, indem zwei verschiedene Sorten von Einzelblechteilen zur Bildung des Statorblechpakets 4 verwendet werden. Die Einzelblechteile werden miteinander stanzpaketiert, klebeverbunden und/oder schweißverbunden. Der dem Getriebe zugewandte axiale Endbereich des Statorblechpakets 4 ist aus kreisförmigen Einzelblechteilen gefertigt und der sich daran anschließende axial mittlere Bereich des Statorblechpakets ist aus im Wesentlichen quadratischen Einzelblechteilen gefertigt, deren in Umfangsrichtung gesehen kleinster Radialaußenabstand größer ist als der Radialaußenabstand der Einzelblechteile des dem Getriebe zugewandten axialen Endbereich des Statorblechpakets 4. Auf diese Weise ist ein in Umfangsrichtung umlaufendes Inneneck gebildet, das an eine entsprechende Außenkante des zentralen Gehäuseteils 1 verbindbar ist. Vorzugsweise wird im Bereich der Innenecke auch eine Dichtung , insbesondere ein O-Ring, vorgesehen. Somit ist das Statorblechpaket dicht mit dem Getriebegehäuseteil 1 verbindbar.

Die Tiefe des Topfes ist dabei derart gewählt, dass die Umlenkbereiche der Statorwicklung, also Stator-Wicklungsköpfe, ausreichend Raum finden, also in axialer Richtung nicht das zentrale Gehäuseteil 1 berühren. Die Ausnehmung 14 ist in der Topfwand angeordnet und ermöglicht somit ein Durchführen der Statorwicklungsdrähte zu der im Anschlussbereich angeordneten Leiterplatte beziehungsweise den dortigen Anschlussvorrichtungen.

Axial zwischen der auf der Rotorwelle 5 angeordneten eintreibenden Verzahnung und der aus den Lagern (2, 3) gebildeten Lagerung ist ein Wellendichtring angeordnet, so dass der Getriebeinnenraum vom Motorinnenraum dicht abtrennbar ist.

Die Aufnahme der Lagerung der Rotorwelle ist durch einen Ring gebildet, der als Hohlzylinder ausgebildet ist und an dessen Außenseite an in Umfangsrichtung voneinander regelmäßig beabstandeten Stellen sich in axialer Richtung erstreckende Verstrebungen angeordnet sind. Der maximale Radialabstand der Verstrebungen wächst in axialer Richtung zur Abtriebswelle hin an, insbesondere linear an, insbesondere so dass die Verstrebungen aus der seitlichen Ansicht gesehen eine dreiecksförmige Form aufweisen.

Der Anschlusskasten, insbesondere der Anschlussbereich des Anschlusskastens, ist in einem axialen Bereich angeordnet, welcher sich überschneidet mit dem von der Statorwicklung, insbesondere einem Wickelkopf der Statorwicklung, überdeckten axialen Bereich. Somit wird zwar die von der Statorwicklung 15 erzeugte Wärme einerseits direkt über das Statorblechpaket 4 an die Umgebungsluft abgeleitet andererseits wird auch ein Teil über das zentrale Gehäuseteil abgeleitet und dann an die Umgebungsluft weitergeleitet. Der Anschlusskasten ist in diesem dem Statorblechpaket 4 zugewandten axialen Endbereich des zentralen Gehäuseteils 1 angeordnet. Auf diese Weise ist nämlich die Oberfläche des zentralen Gehäuseteils in diesem Endbereich durch den Anschlusskasten, insbesondere durch den am zentralen Gehäuseteil 1 einstückig ausgeformten Klemmenkastenansatz, vergrößert. Außerdem stellt der Klemmenkastenansatz eine Wärmekapazität dar, so dass Spitzenwärmeströme aufspreizbar sind. Somit werden die von den Lagern und Verzahnungsteilen erzeugten Wärmeströme des Getriebes über das Getriebegehäuse an die Umgebung weitergeleitet.

Für die bessere wärmetechnische Abtrennung des Motors vom Getriebe ist diejenige Dichtung wirksam, welche zwischen dem Statorblechpaket 4 und dem zentralen Gehäuseteil 1 angeordnet ist, insbesondere im Bereich der Innenecke, also des Zentriersitzes des Statorblechpakets 4 im zentralen Gehäuseteil 1. Außerdem sind die Funktionsteile des Motors und des Getriebes axial nebeneinander angeordnet, so dass eine größere Beabstandung der beiden Komponenten erreicht wird, obwohl eine sehr kompakte Bauart erreicht ist.

Nur die von den Lagern (2, 3) der Rotorwelle 5 erzeugte Wärme wird direkt in das zentrale Gehäuseteil 1 eingeleitet und dann an die Umgebungsluft weitergeleitet.

Es liegt also eine wärmetechnisch getrennte Ableitung der von der Lagerung der Rotorwelle 5 erzeugten Wärme und der von der Statorwicklung 15 erzeugten Wärme vor. Dies hat zum Vorteil, dass bei maximal erlaubter Wärmeleistung der Statorwicklung verschiedene Drehzahlen und somit verschiedene Lagerverlustleistungen ermöglicht sind. Es sind also verschiedene Zustände der Maschine betreibbar. Insbesondere andere als bei gemeinsamer Wärmeableitung vom Lager und von der Statorwicklung über ein gemeinsames Gehäuseteil.

Zwischen der Lagerung der Rotorwelle 5 und der Statorwicklung 15 ist nur eine einzige Wärmesperre in Form der Dichtung notwendig. Bei beidseitiger Lagerung wären hingegen zwei Wärmesperren notwendig.

In der Figur 1 ist am getriebeseitigen Endbereich der Rotorwelle 5 eine Verzahnung sichtbar, die im Eingriff steht mit einem drehfest mit einer Zwischenwelle 12 verbundenem Zahnrad. Dabei ist die Zwischenwelle parallel und beabstandet von der Rotorwelle 5. Ein weiteres drehfest mit der Zwischenwelle 12 verbundenes Verzahnungsteil steht im Eingriff mit dem auf der Abtriebswelle 11 drehfest verbundenen Endrad 13. Die Wärme der Lager 9 der Zwischenwelle 12 und der Lager 10 der Abtriebswelle 11 wird über das zentrale Gehäuseteil 1 an die Umgebung abgeführt.

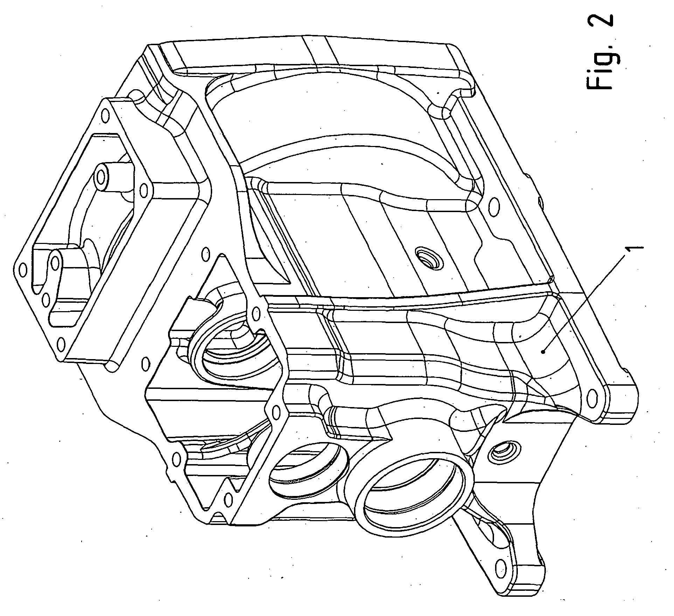

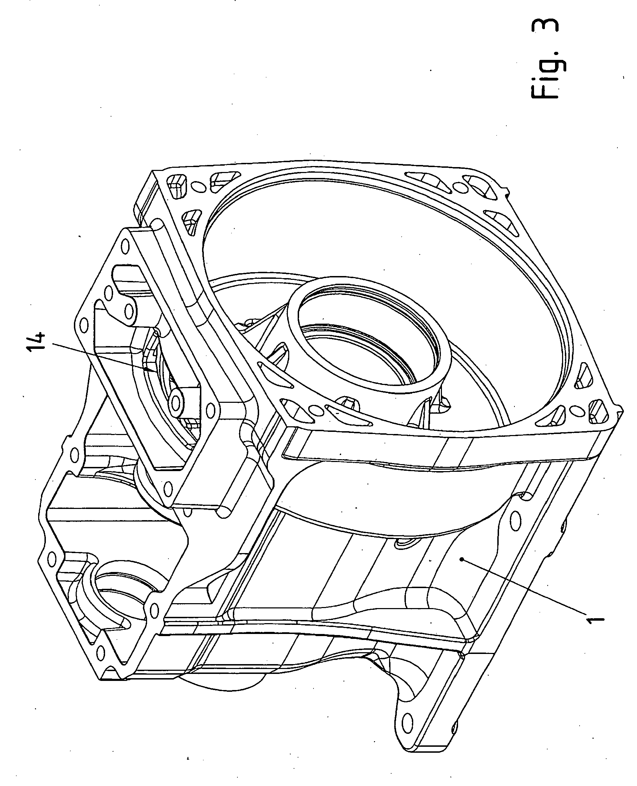

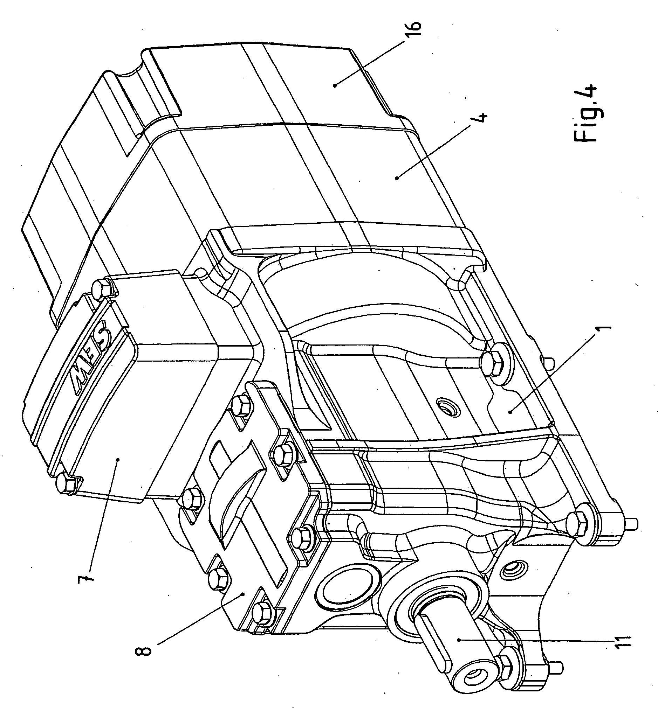

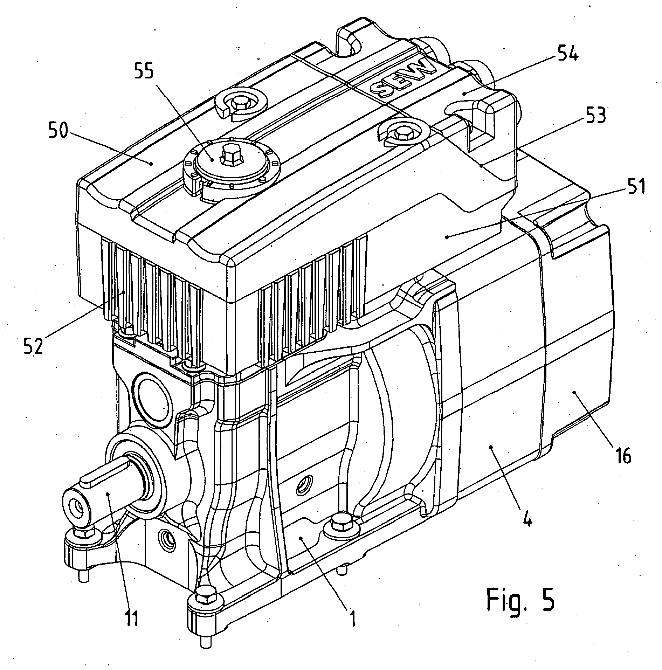

Da zwischen dem Gehäuseteil 16, welches auf der getriebeabgewandten axialen Seite des Statorblechpakets 4 angeordnet ist, und dem Statorblechpaket 4 wiederum eine Dichtung angeordnet ist in der gleichen Weise wie bei der in der Innenecke angeordneten Dichtung, ist auch hier eine Wärmesperre wirksam. Somit wird die von der Statorwicklung erzeugte Wärme bevorzugt über das Statorblechpaket an die Umgebungsluft abgeleitet.
Wie in Figur 5 gezeigt, ist statt des Klemmenkastendeckels 7 der Figuren 1 bis 4 alternativ ein Umrichter aufsteckbar. Hierzu ist ein Gehäuseoberteil 50 auf einem Gehäuseunterteil 51 aufgesetzt, welches wiederum auf dem Klemmenkastenansatz aufgesetzt und verbunden ist anstatt des Klemmenkastendeckels 7. Die Leistungselektronik des Umrichters ist wärmeleitend mit dem Gehäuseunterteil 51 verbunden, welches den Klemmenkasten, also Anschlusskasten, seitlich überragt und somit zwischen dem Gehäuseoberteil 50 und dem Getriebe angeordnet ist. In diesem überragenden Bereich weist das Gehäuseunterteil 51 Kühlrippen 52 auf.

An dem dem Motor näher angeordneten axialen Endbereich des Umrichters ist an einer Seite ein an einer Schrägung 53 des Gehäuseoberteils 50 ansetzbares Gehäuseteil 54 vorgesehen.
An der Oberseite des Gehäuseoberteils 50 ist ein Bedienelement 55 angeordnet, so dass beispielsweise die Drehzahl des Motors steuerbar ist.

Am Getriebe ist der Getriebedeckel 8 direkt dem Gehäuseunterteil 51 des Umrichters gegenüberstehend angeordnet. Da der Getriebedeckel 8 mit dem zentralen Gehäuseteil 1 dicht verbunden ist und hierzu eine Dichtung im Verbindungsbereich zwischen Getriebedeckel 8 und zentralem Gehäuseteil 1 zwischengeordnet ist, ist hierdurch eine Wärmesperre wirksam. Der Getriebedeckel weist eine niedrigere Temperatur auf als das zentrale Gehäuseteil 1, da die von den Lagern (2, 3, 10, 9) erzeugte Wärme in das zentrale Gehäuseteil 1 eingeleitet wird.

Somit ist der den Klemmenkastenansatz seitlich zum Getriebe hin überragende Abschnitt des Gehäuseunterteils als Kühlkörper für die Leistungselektronik wirksam und der auch im Zwischenbereich zwischen Getriebedeckel und Gehäuseunterteil konvektiv oder aktiv geförderte Luftstrom sorgt für eine effektive Entwärmung.

Durch die das Getriebe überragende Anordnung des Umrichters ist um das Statorblechpaket 4 mehr freier Luftraum geschaffen und somit eine verbesserte Entwärmung erreichbar, da der Luft weniger Strömungswiderstand dort entgegengesetzt ist.

Das zentrale Gehäuseteil 1, der Getriebedeckel 8 und/oder das Gehäuseunterteil 51 sind aus Metall, insbesondere Aluminium oder Stahl.

Bei weiteren erfindungsgemäßen Ausführungen ist ein Sensor und/oder ein Aktor im Getriebe anordenbar, dessen elektrische Leitungen in den Anschlussbereich geführt werden. Durch die einstückige Ausführung des zentralen Gehäuseteils 1 des Getriebes ist es in einfacher Weise ermöglicht, eine Leitung vom Sensor oder Aktor, der auch im Getriebeinneren angeordnet sein darf, zum Anschlussbereich zu führen, wobei die Leitung vom Getriebegehäuse geschützt verlegbar ist.

Bei einem weiteren erfindungsgemäßen Ausführungsbeispiel ist der Getriebedeckel aus Kunststoff ausgeführt.

### Bezugszeichenliste

1 Zentrales Gehäuseteil
2 Lager, getriebeabgewandtes Lager der Rotorwelle
3 Lager, getriebezugewandtes Lager der Rotorwelle
4 Statorblechpaket
5 Rotorwelle
6 Leiterplatte
7 Klemmenkastendeckel
8 Getiriebedeckel
9 Lager der Zwischenwelle 12
10 Lager der Abtriebswelle
11 Abtriebswelle
12 Zwischenwelle
13 Zahnrad, insbesondere Endrad
14 Ausnehmung
15 Statorwicklung
16 Gehäuseteil
17 Aktivteil, insbesondere Kurzschlusskäfig
50 Gehäuseoberteil
51 Gehäuseunterteil
52 Kühlrippen
53 Schrägung
54 Gehäuseteil
55 Bedienelement

## Patentansprüche

1. Getriebe mit einem zentralen Gehäuseteil (1),
**dadurch gekennzeichnet, dass**
im zentralen Gehäuseteil (1)
- die Lager (2,3) der eintreibenden Welle (5) des Getriebes,
- die Lager (10) der Abtriebswelle (11)
- und/oder die Lager (9) einer Zwischenwelle (12)
aufgenommen sind, insbesondere aufgenommen und wärmeleitend verbunden sind,
wobei die wellen (5,11,12) parallel zueinander angeordnet sind,
wobei das zentrale Gehäuseteil (1) einen einstückig an ihm angeformten Klemmenkastenansatz aufweist, auf den ein Umrichter als Oberteil aufgesetzt ist, wobei der Umrichter ein Gehäuseunterteil (51) und ein Gehäuseoberteil aufweist,
wobei auf den Klemmenkastenansatz das Oberteil , aufgesetzt ist zur Bildung eines Anschlussbereichs,
insbesondere wobei zwischen zentralem Gehäuseteil, insbesondere Klemmenkastenansatz, und Oberteil eine Wärmesperre, insbesondere Dichtung angeordnet ist,
wobei das zentrale Gehäuseteil eine Ausnehmung (14), insbesondere eine Kabeldurchführung, zur Durchführung von elektrischen Leitungen, insbesondere Statorwicklungsdrähten, aufweist, wobei die Ausnehmung (14) in den Anschlussbereich mündet,
insbesondere wobei das zentrale Gehäuseteil eine Ausnehmung aufweist, durch welche Statorwicklungsdrähte in einen Anschlussbereich, insbesondere in einen Anschlusskasten, herausgeführt sind, insbesondere aus dem Motorinnenraum radial herausgeführt sind,
wobei das zentrale Gehäuseteil (1) die Lager (2, 3) der eintreibenden Welle des Getriebes aufnimmt, wobei die eintreibende Welle auch als einseitig im zentralen Gehäuseteil (1) gelagerte Rotorwelle (5) eines Elektromotors fungiert,
wobei das zentrale Gehäuseteil als Klemmenkastenansatz einen Oberflächenabschnitt aufweist, in welchen Gewindebohrungen eingebracht sind und auf den das Gehäuseunterieil (51) aufgesetzt ist,
wobei die Ausnehmung im Oberflächenabschnitt angeordnet ist,
wobei der Oberflächenabschnitt ein ebener Flächenabschnitt ist.

2. Getriebe nach Anspruch 1,
**dadurch gekennzeichnet, dass**
im Anschlussbereich eine Anschlussvorrichtung angeordnet ist, welche einen Statorwicklungsdraht mit einer anderen elektrischen Leitung elektrisch verbindet,
insbesondere wobei die elektrische Leitung verbunden ist mit einem Umrichter oder einem vom Getriebe beabstandeten Elektrogerät.

3. Getriebe nach mindestens einem der vorangegangenen Ansprüche,
**dadurch gekennzeichnet, dass**
die eintreibende Welle auch als einseitig im zentralen Gehäuseteil gelagerte Rotorwelle eines Elektromotors fungiert.

4. Getriebe nach mindestens einem der vorangegangenen Ansprüche,
**dadurch gekennzeichnet, dass**
in einem ersten axialen Bereich die Rotorwelle ein Aktivteil aufweist und
in einem zweiten axialen Bereich die Rotorwelle eine eintreibende Verzahnung des Getriebes aufweist oder mit einem eintreibenden Verzahnungsteil des Getriebes verbunden ist,
wobei die Lagerung, insbesondere die Lager der Rotorwelle, der Rotorwelle axial, insbesondere also in Rotorachsrichtung, zwischen dem ersten und dem zweiten axialen Bereich angeordnet ist,
insbesondere wobei ein am zentralen Gehäuseteil aufgenommener Wellendichtring axial zwischen der Lagerung der Rotorwelle und der eintreibenden Verzahnung des Getriebes angeordnet ist.

5. Getriebe nach mindestens einem der vorangegangenen Ansprüche,
**dadurch gekennzeichnet, dass**
zwischen dem zentralen Gehäuseteil und dem Statorblechpaket des Motors eine Wärmesperre, insbesondere Dichtung, angeordnet ist.

6. Getriebe nach mindestens einem der vorangegangenen Ansprüche,
**dadurch gekennzeichnet, dass**
zwischen dem zentralen Gehäuseteil und einem verbundenen Getriebedeckel eine weitere Wärmesperre, insbesondere Dichtung, angeordnet ist.

7. Getriebe nach mindestens einem der vorangegangenen Ansprüche,
**dadurch gekennzeichnet, dass**
das zentrale Gehäuseteil einen einstückig an ihm angeformten Klemmenkastenansatz aufweist, auf den ein Klemmenkastendeckel oder alternativ ein Umrichter aufsetzbar ist, insbesondere schraubverbindbar ist.

8. Getriebe nach mindestens einem der vorangegangenen Ansprüche,
**dadurch gekennzeichnet, dass**
ein Umrichter mit dem Getriebe verbunden ist, wobei der Umrichter ein Gehäuseunterteil aufweist, mit welchem die Leistungselektronik des Umrichters verbunden ist, insbesondere wärmeleitend verbunden ist, und wobei der Umrichter ein auf das Gehäuseunterteil verbundenes Gehäuseoberteil aufweist, mit welchem die Signalelektronik wärmeleitend verbunden ist, insbesondere über zwischengeordnete Luft.

9. Getriebe nach mindestens einem der vorangegangenen Ansprüche,
**dadurch gekennzeichnet, dass**
zwischen Gehäuseunterteil und Gehäuseoberteil eine Wärmesperre, insbesondere Dichtung, angeordnet ist
und/oder dass das Gehäuseoberteil aus Kunststoff ausgeführt ist.

10. Getriebe nach mindestens einem der vorangegangenen Ansprüche,
**dadurch gekennzeichnet, dass**
das Gehäuseunterteil mit dem Klemmenkastenansatz des zentralen Gehäuseteils verbunden ist und dieses seitlich überragt,
und/oder das Gehäuseunterteil in axialer Richtung den vom zentralen Gehäuseteil, den vom Getriebedeckel, den von einer Zwischenwelle und/oder den von der Abtriebswelle axial überdeckten Bereich zumindest teilweise überdeckt.

11. Getriebe nach mindestens einem der vorangegangenen Ansprüche,
**dadurch gekennzeichnet, dass**
durch die durch den Getriebedeckel abgedeckte Ausnehmung des zentralen Gehäuseteils das Endrad des Getriebes hindurchführbar ist, insbesondere bei Montage des Getriebes,
und/oder dass
der vom Anschlussbereich axial überdeckte Bereich zumindest teilweise den von der Lagerung der Rotorwelle oder von einem Lager der Rotorwelle überdeckten axialen Bereich überdeckt.

12. Getriebe nach mindestens einem der vorangegangenen Ansprüche,
**dadurch gekennzeichnet, dass**
das Statorblechpaket aus zwei Sorten von Einzelblechteilen zusammengesetzt ist, insbesondere stanzpaketiert, klebeverbunden und/oder schweißverbunden ist,
insbesondere wobei das Statorblechpaket einen ersten Abschnitt aufweist, der aus Einzelblechteilen erster Sorte zusammengesetzt ist, und einen zweiten Abschnitt aufweist, der aus Einzelblechteilen zweiter Sorte zusammengesetzt ist,
insbesondere wobei die erste Wärmesperre an einer Innenecke angeordnet ist, die im Übergangsbereich zwischen dem ersten und zweiten Abschnitt gebildet ist,
insbesondere wobei die Einzelblechteile der ersten Sorte sich radial weiter erstrecken als die Einzelblechteile der zweiten Sorte.

13. Getriebe nach mindestens einem der vorangegangenen Ansprüche,
**dadurch gekennzeichnet, dass**
am zentralen Gehäuseteil eine Lageraufnahme für die Lager der Rotorwelle ausgeformt ist, wobei die Lageraufnahme ringförmig ausgeführt ist, wobei an der Außenseite des Rings in Umfangsrichtung regelmäßig voneinander beabstandete Stützbereiche aufweist, insbesondere deren größter Radialabstand in axialer Richtung vom Motor weg zunimmt,
und/oder dass
am zentralen Gehäuseteil eine topfförmige Aufnahme für einen Wickelkopf des Stators ausgeformt ist, die durch die Ausnehmung unterbrochen ist.

14. Getriebe nach mindestens einem der vorangegangenen Ansprüche,
**dadurch gekennzeichnet, dass**
Abtriebswelle und Rotorwelle koaxial angeordnet sind,
und/oder dass
der Anschlusskasten am Getriebe angeordnet ist und zwischen dem Umrichter und dem Getriebe angeordnet ist,
und/oder dass
ein Sensor zwischen den Lagern der Rotorwelle am zentralen Gehäuseteil angeordnet ist, der mit der Rotorwelle derart in Wirkverbindung tritt, dass eine physikalische Größe bestimmbar ist,
wobei durch einen Durchlass der Lageraufnahme der Lagerung der Rotorwelle elektrische Leitungen zum Sensor geführt sind, die vom Anschlussbereich durch die Ausnehmung im zentralen Gehäuseteil geführt sind.

## Claims

1. A transmission having a central housing part (1),
**characterised in that**
in the central housing part (1)
- the bearings (2, 3) of the input shaft (5) of the transmission,
- the bearings (10) of the output shaft (11) and/or
- the bearings (9) of an intermediate shaft (12)
are received, in particular are received and are connected thermally conductively, wherein the shafts (5, 11, 12) are arranged parallel to one another,
wherein the central housing part (1) includes a terminal box attachment that is integrally formed in one piece therewith and on which an inverter is placed as the upper part, wherein the inverter includes a housing lower part (51) and a housing upper part,
wherein the upper part is placed on the terminal box attachment, for forming a terminal region,
in particular wherein there is arranged between the central housing part, in particular the terminal box attachment, and the upper part a heat barrier, in particular a seal, wherein the central housing part includes a recess (14), in particular a cable lead-through, for leading through electrical lines, in particular stator winding wires, wherein the recess (14) opens into the terminal region,
in particular wherein the central housing part includes a recess through which stator winding wires are guided out into a terminal region, in particular a terminal box, in particular being guided radially out of the motor interior,
wherein the central housing part (1) receives the bearings (2, 3) of the input shaft of the transmission, wherein the input shaft also acts as a rotor shaft (5) of an electric motor, this rotor shaft being mounted on one side in the central housing part (1), wherein the central housing part includes as the terminal box attachment a surface portion in which threaded bores are made and on which the housing lower part (51) is placed,
wherein the recess is made in the surface portion,
wherein the surface portion is a planar face portion.

2. A transmission according to Claim 1,
**characterised in that**
there is arranged in the terminal region a terminal device which electrically connects a stator winding wire to another electrical line,
in particular wherein the electrical line is connected to an inverter or to an electrical device that is spaced from the transmission.

3. A transmission according to at least one of the preceding claims,
**characterised in that**
the input shaft also acts as a rotor shaft of an electric motor, this rotor shaft being mounted on one side in the central housing part.

4. A transmission according to at least one of the preceding claims,
**characterised in that**
in a first axial region the rotor shaft includes an active part, and
in a second axial region the rotor shaft includes an input toothing of the transmission or is connected to an input toothing part of the transmission,
wherein the mounting, in particular the bearings of the rotor shaft, is arranged axially in respect of the rotor shaft, thus in particular in the rotor axis direction, between the first and the second axial region,
in particular wherein a shaft sealing ring that is received on the central housing part is arranged axially between the mounting of the rotor shaft and the input toothing of the transmission.

5. A transmission according to at least one of the preceding claims,
**characterised in that**
a heat barrier, in particular a seal, is arranged between the central housing part and the stator core assembly of the motor.

6. A transmission according to at least one of the preceding claims,
**characterised in that**
a further heat barrier, in particular a seal, is arranged between the central housing part and a connected transmission cover.

7. A transmission according to at least one of the preceding claims,
**characterised in that**
the central housing part includes a terminal box attachment that is integrally formed in one piece therewith and on which a terminal box cover or alternatively an inverter may be placed, in particular may be connected by screws.

8. A transmission according to at least one of the preceding claims,
**characterised in that**
an inverter is connected to the transmission, wherein the inverter includes a housing lower part to which the power electronics of the inverter is connected, in particular is connected thermally conductively, and wherein the inverter includes a housing upper part that is connected to the housing lower part and to which the signal electronics is connected thermally conductively, in particular by way of intermediate air.

9. A transmission according to at least one of the preceding claims,
**characterised in that**
a heat barrier, in particular a seal, is arranged between the housing lower part and the housing upper part,
and/or **in that** the housing upper part is made from synthetic material.

10. A transmission according to at least one of the preceding claims,
**characterised in that**
the housing lower part is connected to the terminal box attachment of the central housing part and projects laterally beyond the latter,
and/or the housing lower part at least partly covers in the axial direction the region that is axially covered by the central housing part, the region that is axially covered by the transmission cover, the region that is axially covered by an intermediate shaft and/or the region that is axially covered by the output shaft.

11. A transmission according to at least one of the preceding claims,
**characterised in that**
the end wheel of the transmission may be guided through the recess in the central housing part that is covered by the transmission cover, in particular when the transmission is assembled,
and/or **in that**
the region that is axially covered by the terminal region at least partly covers the axial region that is covered by the mounting of the rotor shaft or a bearing of the rotor shaft.

12. A transmission according to at least one of the preceding claims,
**characterised in that**
the stator core assembly is composed of two sorts of individual metal sheets, in particular being punch-packed, joined by adhesion and/or joined by welding,
in particular wherein the stator core assembly includes a first portion that is composed of individual metal sheets of a first sort and a second portion that is composed of individual metal sheets of a second sort,
in particular wherein the first heat barrier is arranged at an internal corner that is formed in the transition region between the first and the second portion,
in particular wherein the individual metal sheets of the first sort extend radially further than the individual metal sheets of the second sort.

13. A transmission according to at least one of the preceding claims,
**characterised in that**
there is formed in the central housing part a bearing receiver for the bearings of the rotor shaft,
wherein the bearing receiver takes the form of a ring, wherein on the outside of the ring in the peripheral direction mutually regularly spaced support regions are present, in particular the greatest radial spacing thereof increasing in the axial direction away from the motor,
and/or **in that**
there is formed in the central housing part a pot-shaped receiver for an end winding of the stator, this receiver being interrupted by the recess.

14. A transmission according to at least one of the preceding claims,
**characterised in that**
the output shaft and the rotor shaft are arranged coaxially,
and/or **in that**
the terminal box is arranged on the transmission and is arranged between the inverter and the transmission,
and/or **in that**
a sensor is arranged between the bearings of the rotor shaft on the central housing part and comes into operational connection with the rotor shaft such that a physical variable may be determined,
wherein electrical lines to the sensor are guided through a passage in the bearing receiver of the mounting of the rotor shaft and are guided from the terminal region through the recess in the central housing part.

## Revendications

1. Transmission avec une partie de carter centrale (1),
**caractérisée en ce que**
- les paliers (2, 3) de l'arbre d'entrée (5) de la transmission,
- les paliers (10) de l'arbre de sortie (11),
- et/ou les paliers (9) d'un arbre intermédiaire (12),
sont logés dans la partie de carter centrale (1), en particulier sont logés et reliés en conduction thermique,
sachant que les arbres (5, 11, 12) sont disposés parallèlement entre eux,
sachant que la partie de carter centrale (1) présente un prolongement formant boîte à bornes, qui est formé d'un seul tenant sur elle et sur lequel est monté un convertisseur comme partie supérieure, sachant que le convertisseur présente une partie inférieure de boîtier (51) et une partie supérieure de boîtier,
sachant que la partie supérieure est montée sur le prolongement formant boîte à bornes afin de former une région de raccordement,
sachant notamment qu'une barrière thermique, en particulier un joint d'étanchéité, est disposée entre la partie de carter centrale, en particulier le prolongement formant boîte à bornes, et la partie supérieure,
sachant que la partie de carter centrale présente un évidement (14), en particulier un passe-câbles, pour le passage de lignes électriques, en particuliers de fils de bobinage de stator, sachant que l'évidement (14) débouche dans la région de raccordement,
sachant notamment que la partie de carter centrale présente un évidement par lequel des fils de bobinage de stator sont sortis dans une région de raccordement, en particulier dans une boîte de raccordement, en particulier sont sortis radialement de l'espace intérieur du moteur,
sachant que la partie de carter centrale (1) loge les paliers (2, 3) de l'arbre d'entrée de la transmission, sachant que l'arbre d'entrée fonctionne également en tant qu'arbre de rotor (5), monté d'un côté dans la partie de carter centrale (1), d'un moteur électrique, sachant que la partie de carter centrale présente comme prolongement formant boîte à bornes une portion de surface dans laquelle sont ménagés des perçages filetés et sur laquelle est montée la partie inférieure de boîtier (51),
sachant que l'évidement est disposé dans la portion de surface,
sachant que la portion de surface est une portion de surface plane.

2. Transmission selon la revendication 1, **caractérisée en ce qu'**un dispositif de raccordement est disposé dans la région de raccordement, dispositif qui relie électriquement un fil de bobinage de stator à une autre ligne électrique,
sachant notamment que la ligne électrique est reliée à un convertisseur ou à un appareil électrique distant de la transmission.

3. Transmission selon au moins une des revendications précédentes, **caractérisée en ce que** l'arbre d'entrée fonctionne également en tant qu'arbre de rotor, monté d'un côté dans la partie de carter centrale, d'un moteur électrique.

4. Transmission selon au moins une des revendications précédentes, **caractérisée en ce que**
l'arbre de rotor présente dans une première région axiale une partie active, et
l'arbre de rotor présente dans une deuxième région axiale un engrenage d'entrée de la transmission ou est relié à une partie d'engrenage d'entrée de la transmission,
sachant que l'ensemble de palier, en particulier les paliers de l'arbre de rotor, sont disposés axialement à l'arbre de rotor, donc en particulier dans la direction axiale du rotor, entre la première région axiale et la deuxième région axiale,
sachant notamment qu'une bague d'étanchéité d'arbre logée sur la partie de carter centrale est disposée axialement entre l'ensemble de palier de l'arbre de rotor et l'engrenage d'entrée de la transmission.

5. Transmission selon au moins une des revendications précédentes, **caractérisée en ce qu'**une barrière thermique, en particulier un joint d'étanchéité, est disposée entre la partie de carter centrale et l'empilage de tôles de stator du moteur.

6. Transmission selon au moins une des revendications précédentes, **caractérisée en ce qu'**une autre barrière thermique, en particulier un joint d'étanchéité, est disposée entre la partie de carter centrale et un couvercle de transmission assemblé à celle-ci.

7. Transmission selon au moins une des revendications précédentes, **caractérisée en ce que** la partie de carter centrale présente un prolongement formant boîte à bornes, qui est formé d'un seul tenant sur elle et sur lequel peut être monté, en particulier peut être boulonné, un couvercle de boîte à bornes ou alternativement un convertisseur.

8. Transmission selon au moins une des revendications précédentes, **caractérisée en ce qu'**un convertisseur est relié à la transmission, sachant que le convertisseur présente une partie inférieure de boîtier à laquelle est reliée l'électronique de puissance du convertisseur, en particulier est reliée en conduction thermique, et sachant que le convertisseur présente une partie supérieure de boîtier, qui est montée sur la partie inférieure de boîtier et à laquelle est reliée en conduction thermique l'électronique de signalisation, en particulier via de l'air interposé.

9. Transmission selon au moins une des revendications précédentes, **caractérisée en ce qu'**une barrière thermique, en particulier un joint d'étanchéité, est disposée entre la partie inférieure de boîtier et la partie supérieure de boîtier,
et/ou **en ce que** la partie supérieure de boîtier est réalisée en matière plastique.

10. Transmission selon au moins une des revendications précédentes, **caractérisée en ce que** la partie inférieure de boîtier est assemblée au prolongement formant boîte à bornes de la partie de carter centrale et dépasse latéralement de celui-ci, et/ou la partie inférieure de boîtier recouvre au moins partiellement en direction axiale la région recouverte axialement par la partie de carter centrale, la région recouverte axialement par le couvercle de transmission, la région recouverte axialement par un arbre intermédiaire et/ou la région recouverte axialement par l'arbre de sortie.

11. Transmission selon au moins une des revendications précédentes, **caractérisée en ce que** le pignon final de la transmission peut être passé à travers l'évidement de la partie de carter centrale recouvert par le couvercle de transmission, en particulier lors du montage de la transmission,
et/ou **en ce que** la région recouverte axialement par la région de raccordement recouvre au moins partiellement la région axiale recouverte par l'ensemble de palier de l'arbre de rotor ou par un palier de l'arbre de rotor.

12. Transmission selon au moins une des revendications précédentes, **caractérisée en ce que** l'empilage de tôles de stator est composé de deux sortes de tôles individuelles, en particulier assemblées par boutonnage, collage et/ou soudage,
sachant notamment que l'empilage de tôles de stator présente une première partie qui est composée de tôles individuelles de la première sorte, et une deuxième partie qui est composée de tôles individuelles de la deuxième sorte,
sachant notamment que la première barrière thermique est disposée sur un coin intérieur qui est formé dans la région de transition entre la première et la deuxième partie, sachant notamment que les tôles individuelles de la première sorte s'étendent radialement plus loin que les tôles individuelles de la deuxième sorte.

13. Transmission selon au moins une des revendications précédentes, **caractérisée en ce qu'**un logement de palier pour les paliers de l'arbre de rotor est façonné sur la partie de carter centrale, sachant que le logement de palier est réalisé annulaire, sachant qu'il présente sur le côté extérieur de l'anneau des régions de soutien régulièrement distantes entre elles en direction périphérique, en particulier dont la distance radiale maximale augmente en éloignement du moteur en direction axiale, et/ou **en ce qu'**un logement en forme de pot pour une tête de bobinage du stator est façonné sur la partie de carter centrale, logement qui est interrompu par l'évidement.

14. Transmission selon au moins une des revendications précédentes, **caractérisée en ce que** l'arbre de sortie et l'arbre de rotor sont disposés coaxialement, et/ou **en ce que** la boîte à bornes est disposée sur la transmission et est disposée entre le convertisseur et la transmission,
et/ou **en ce qu'**un capteur est disposé entre les paliers de l'arbre de rotor sur la partie de carter centrale, capteur qui entre en liaison fonctionnelle avec l'arbre de rotor de telle sorte qu'une grandeur physique peut être déterminée,
sachant que des lignes électriques sont dirigées vers le capteur par un passage du logement de palier de l'ensemble de palier de l'arbre de rotor, lignes qui sont dirigées de la région de raccordement dans la partie de carter centrale par l'évidement.
